# FASCICULE DE BREVET EUROPEEN

(11) **EP 3 932 690 B1**
(45) Date de publication et mention de la délivrance du brevet: **15.05.2024**
(21) Numéro de dépôt: 21183130.0
(22) Date de dépôt: 01.07.2021
(51) Int. Cl.: B60B 17/00

(54) **ROUE DE CHEMIN DE FER À FAIBLE DÉJETTEMENT**
EISENBAHNRAD MIT KLEINEM ÜBERSTAND
RAILWAY WHEEL WITH LOW DEFORMATION

(30) Priorité: 03.07.2020 FR 2007095
(43) Date de publication de la demande: 05.01.2022
(73) Titulaire: MG-Valdunes, 59125 Trith Saint Leger (FR)
(72) Inventeur: DEMILLY, François Guy Jean, 59130 LAMBERSART (FR); FORTIN, Fabrice André Albert, 59800 LILLE (FR); SALENGRO, Stéphane Michel Roger, 59229 UXEM (FR)
(74) Mandataire: Lavoix

(56) Documents cités:
- EP-A1- 2 801 483
- EP-A2- 1 440 817
- WO-A1-2008/015712
- DE-A1-102004 012 667
- US-A- 5 333 926

## Description

La présente invention concerne une roue de chemin de fer présentant un faible déjettement, en particulier lorsqu'elle est freinée par sabot.

Cette roue de chemin de fer peut être prévue pour un véhicule ferroviaire de transport de fret destiné à être lourdement chargé ou pour un véhicule ferroviaire prévu pour circuler à grande vitesse. Un véhicule ferroviaire prévu pour rouler à grande vitesse est typiquement capable de rouler à une vitesse supérieure à 200 km/h.

Une roue de chemin de fer comprend généralement une jante, un moyeu et une toile assurant la liaison entre la jante et le moyeu. La jante comprend généralement une surface de roulement et un boudin de guidage latéral.

La roue de chemin de fer est prévue pour être montée sur une portée de calage d'essieu-axe par l'intermédiaire de son moyeu et pour venir en contact et rouler sur un rail par l'intermédiaire de la surface de roulement de sa jante. Le boudin de la jante vient en contact avec un flanc du rail pour assurer le guidage latéral de la roue de chemin de fer lors de changement de voie et dans les contre-rails.

Le freinage d'une roue de chemin de fer peut être assuré notamment à l'aide d'un sabot appliqué contre la jante, le sabot étant réalisé dans un matériau de freinage métallique ou composite.

Les contraintes mécaniques et les dilatations thermiques engendrées dans la roue de chemin de fer par les freinages successifs provoquent une déformation de la toile, appelée déjettement, qui modifie la position axiale de la jante par rapport au moyeu, de telle sorte que l'écartement des jantes des deux roues d'un même essieu est soit augmenté, soit réduit, selon la géométrie de la roue.

Lorsque le déjettement conduit à réduire l'écartement des jantes, le passage d'appareils de voie tels que les aiguillages est rendu difficile, ce qui peut conduire à des déraillements si la déformation est trop importante. Il est donc généralement préféré de choisir une géométrie de roue qui tend à écarter les jantes sous l'effet du freinage.

Lorsque le déjettement conduit à augmenter l'écartement des jantes, il tend à faire frotter les boudins des jantes sur le flanc des rails, ce qui entraîne une usure supplémentaire.

Dans les deux cas, pour éviter les difficultés engendrées par un déjettement trop important, on limite les échauffements en service des roues en limitant la charge thermique par essieu.

Cela est particulièrement vrai sur les lignes de chemin de fer dont le profil nécessite des freinages longs, comme par exemple, celles qui franchissent des cols dans les régions montagneuses.

Le déjettement comprend le déjettement à chaud existant pendant les périodes de freinage, et le déjettement résiduel subsistant après le refroidissement de la roue de chemin de fer et résultant de déformations permanentes engendrées par les échauffements.

De plus, les échauffements successifs engendrent dans la roue de chemin de fer un champ de contraintes résiduelles de traction relativement importantes qui limitent sa tenue en service par la propagation de défauts superficiels en fatigue.

EP0798136A1 divulgue une roue de chemin de fer dont la toile s'étend suivant une ligne méridienne curviligne s'étendant entre un premier point et un deuxième point qui sont situés de part et d'autre d'un plan médian passant par la mi-épaisseur de la jante et qui sont symétriques par rapport au point d'intersection de la ligne méridienne avec le plan médian, ledit point d'intersection étant un point d'inflexion de la ligne méridienne. Les tangentes à la ligne méridienne au premier point et au deuxième point sont sensiblement parallèles au plan médian.

Cette roue de chemin de fer donnait des résultats satisfaisant en ce qui concerne la limitation du déjettement avec les dispositifs de freinage utilisés jusqu'à présent, comprenant généralement des sabots réalisés en métal et qui pouvait évacuer une partie de la chaleur, limitant ainsi l'échauffement de la roue de chemin de fer.

Toutefois, des nouveaux dispositifs de freinage utilisent désormais des sabots en matériaux composites moins bon conducteurs de chaleur que le métal, de sorte que les sabots évacuent moins de chaleur lors des freinages, et que les roues de chemin de fer subissent des échauffements plus forts lors des freinages, augmentant le déjettement et les contraintes résiduelles de traction des roues de chemin de fer.

EP2801483A1, DE102004012667A1, WO2008015712A1, EP1440817A2 et US5333926A divulguent des roues de chemin de fer.

Un des buts de la présente invention est de proposer une roue de chemin de fer à faible sensibilité au déjettement à chaud et résiduel, et de faible niveau de contraintes résiduelles de traction tout en conservant une bonne tenue thermomécanique.

A cet effet, l'invention propose une roue de chemin de fer selon la revendication 1.

L'angle non-nul des tangentes au premier point et au deuxième point de la ligne méridienne permet de concevoir une roue de chemin de fer conservant des caractéristiques thermomécaniques satisfaisantes (rigidité, souplesse, tenue mécanique, résistance mécanique), tout en limitant le déjettement (à chaud et/ou résiduel), en particulier en réalisant une jante et une première zone de liaison entre la toile et la jante qui facilitent l'évacuation de la chaleur de la jante lors de freinage.

Des caractéristiques optionnelles de la roue de chemin de fer sont définies aux revendications 2 à 13.

L'invention concerne aussi un bogie de véhicule ferroviaire selon la revendication 14.

L'invention concerne encore un véhicule ferroviaire selon la revendication 15.

L'invention et ses avantages seront mieux compris à la lecture de la description qui va suivre, donnée uniquement à titre d'exemple non limitatif, et faite en référence aux dessins annexés, sur lesquels :
- la Figure 1 est une demi-vue en coupe d'une roue de chemin de fer ; et
- la Figure 2 est une demi-vue en coupe d'une autre roue de chemin de fer.

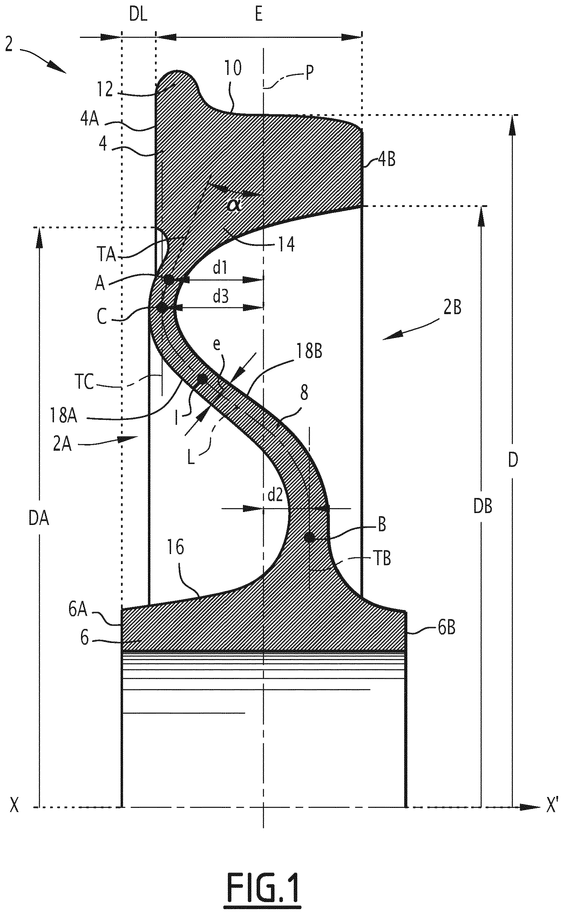

Le roue de chemin de fer 2 de la Figure 1 présente une forme générale de révolution autour d'un axe central X-X' et comprend une jante 4, un moyeu 6 et une toile 8 assurant la liaison entre la jante 4 et le moyeu 6.

La roue de chemin de fer 2 est de préférence réalisée en une seule pièce de matière. Ainsi, la jante 4, le moyeu 6 et la toile 8 sont venues de matières. La roue de chemin de fer 2 est par exemple forgée ou moulée.

La roue de chemin de fer 2 présente deux faces opposées, à savoir une première face 2A et une deuxième face 2B.

La première face 2A est prévue pour être tournée vers une autre roue de chemin de fer coaxiale à la roue de chemin de fer 2 et constituant un essieu avec celle-ci, et la deuxième face 2B est prévue pour être tournée à l'opposé de ladite autre roue de chemin de fer.

La jante 4 possède une surface de roulement 10 et un boudin 12.

La surface de roulement 10 est la surface de la jante 4 par l'intermédiaire de laquelle, en fonctionnement, la jante 4 roule sur des rails d'une voie de chemin de fer.

Le boudin 12 est situé sur un bord de la jante 4, du côté de la première face 2A de la roue de chemin de fer 2. Le boudin 12 est prévu pour assurer le guidage latéral de la roue de chemin de fer 2 par rapport aux rails d'une voie de chemin de fer sur lesquels la roue de chemin de fer 2 roule, en venant en contact avec le flanc de ces rails.

La jante 4 présente un premier flanc 4A et un deuxième flanc 4B. Le premier flanc 4A et le premier flanc 4B sont situés respectivement sur la première face 2A et la face deuxième face 2B de la roue de chemin de fer 2.

Le premier flanc 4A et le deuxième flanc 4B de la jante 4 sont de préférence sensiblement plans et perpendiculaires à l'axe central X-X'.

La jante 4 présente une épaisseur E prise suivant l'axe central X-X', entre le premier flanc 4A et le deuxième flanc 4B de la jante 4.

La roue de chemin de fer 2 possède un plan médian P perpendiculaire à l'axe central X-X' et passant par la mi-épaisseur de la jante 4. Le plan médian P est à équidistance du premier flanc 4A et du deuxième flanc 4B de la jante 4.

Le moyeu 6 présente deux extrémités axiales, à savoir une première extrémité axiale 6A située du côté de la première face 2A de la roue de chemin de fer 2, et une deuxième extrémité axiale 6B située du côté de la deuxième face 2B de la roue de chemin de fer 2.

La toile 8 est reliée à la jante 4 par une première zone de liaison 14 et est reliée au moyeu 6 par une deuxième zone de liaison 16.

La première zone de liaison 14 et la deuxième zone de liaison 16 assurent chacune une transition progressive entre la toile 8 et, respectivement, la jante 4 et le moyeu 6, pour assurer une bonne tenue mécanique, notamment avec une limitation des concentrations de contrainte.

La toile 8 et les première et deuxièmes zones de liaison 14, 16 définissent une première surface latérale 18A située sur la première face 2A de la roue de chemin de fer 2, et une deuxième surface latérale 18B située sur la deuxième face 2B de la roue de chemin de fer 2.

La première surface latérale 18A est située du côté de la première face 2A et s'étend le long de la toile 8 et des première et deuxièmes zones de liaison 14, 16. La deuxième surface latérale 18B est située du côté de la deuxième face 2B et s'étend le long de la toile 8 et des première et deuxièmes zones de liaison 14, 16.

La première surface latérale 18A et la deuxième surface latérale 18B s'étendent chacune de la jante 4 au moyeu 6.

Comme illustré sur la Figure 1, dans une demi-section de la roue de chemin de fer 2 dans un plan contenant l'axe central X-X' (par ex. le plan de la Figure 1), la toile 8 s'étend suivant une ligne méridienne L entre un premier point A et un deuxième point B. La toile 8 rejoint la première zone de liaison 14 au premier point A et rejoint la deuxième zone de liaison 16 au deuxième point B.

La toile 8 présente une épaisseur e prise perpendiculairement à la ligne méridienne L.

De préférence, l'épaisseur e de la toile 8 diminue de manière monotone et progressive le long de la ligne méridienne L lorsque l'on se déplace du moyeu 6 vers la jante 4.

Ceci permet de conserver une bonne tenue mécanique tout en allégeant la toile 8 et donc la roue 2 dans son ensemble.

La ligne méridienne L est curviligne.

Ceci permet de conférer une certaine souplesse à la toile 8, tout en conservant une bonne tenue mécanique.

Le premier point A et le deuxième point B sont situés de part et d'autre du plan médian P.

De préférence, le premier point A est situé du même côté du plan médian P que le boudin 12 et le deuxième point B est situé du côté opposé. Le premier point A est décalé du côté de la première face 2A par rapport au plan médian P, et le point B est décalé du côté de la deuxième face 2B par rapport au plan médian P.

La ligne méridienne L coupe le plan médian P, et s'étend entre le premier point A et le plan médian P en étant situé du côté de la première face 2A par rapport au plan médian P, et s'étend entre le plan médian P et le deuxième point B en étant située du côté de la deuxième face 2B par rapport au plan médian P.

La ligne méridienne L présente par exemple un point d'inflexion I entre le premier point A et le deuxième point B, et de préférence un seul point d'inflexion I entre le premier point A et le deuxième point B.

Le point d'inflexion I est par exemple décalé par rapport au plan médian P. Ainsi, le point d'inflexion I n'appartient pas au plan médian P. De préférence, le point d'inflexion I est situé du même côté que le premier point A par rapport au plan médian P, en particulier du côté de la première face 2A.

En se déplaçant radialement le long de la toile 8, la première surface latérale 18A et la deuxième surface latérale 18B de la roue 2 sont courbes et suivent la ligne méridienne L entre le premier point A et le deuxième point B.

La première surface latérale 18A et la deuxième surface latérale 18B présentent, en chaque point de la ligne méridienne L, des courbures contraires : lorsque la première surface latérale 18A est concave en un point le long de la ligne méridienne L, la deuxième surface latérale 18B est convexe à ce même point, et inversement, lorsque la première surface latérale 18A est convexe en un point le long de la ligne méridienne L, la deuxième surface latérale 18B est concave à ce même point.

Comme dans l'exemple illustré, lorsque le point A et le point B sont situés respectivement du côté de la première surface latérale 18A et du côté de la deuxième surface latérale 18B par rapport au plan médian P et que la ligne méridienne L présente une unique point d'inflexion I, la première surface latérale 18A est convexe tandis que la deuxième surface latérale 18B est concave entre le point A et le point d'inflexion I, et la première surface latérale 18A est concave tandis que la deuxième surface latérale 18B est convexe entre le point d'inflexion I et le deuxième point B.

Dans chaque zone de liaison 14, 16, les concavités de la première surface latérale 18A et de la deuxième surface latérale 18B sont de même type. Plus précisément, dans chaque zone de liaison 14, 16, la première surface latérale 18A et la deuxième surface latérale 18B sont toutes les deux concaves. Ceci permet une augmentation progressive et rapide de l'épaisseur de la roue 2 dans les zones de liaison 14, 16.

De préférence, de la jante 4 au moyeu 6, i.e. sur successivement la première zone de liaison 14, la toile 8 et la deuxième zone de liaison 16, la première surface latérale 18A et la deuxième surface latérale 18B sont chacune courbe et essentiellement dépourvue d'arête ou de cassure.

Ainsi, lorsque l'on parcourt la ligne méridienne L en direction de la jante 4, le premier point A se situe à proximité de la jante 4, à l'endroit où la première surface latérale 18A et la deuxième surface latérale 18B passent d'une configuration où leurs courbures sont de types différents (convexe/concave), à une configuration où elles sont toutes les deux concaves, et lorsque l'on parcourt la ligne méridienne L en direction du moyeu 6, le deuxième point B se situe à proximité du moyeu 6, à l'endroit où la première surface latérale 18A et la deuxième surface latérale 18B passent d'une configuration où leurs courbures sont de types différents (convexe/concave), à une configuration où elles sont toutes les deux concaves.

Comme dans l'exemple illustré, lorsque le point A et le point B sont situés respectivement du côté de la première face 2A et du côté de la deuxième face 2B par rapport au plan médian P et que la ligne méridienne L présente une unique point d'inflexion I, lorsque l'on parcourt la ligne méridienne L en direction de la jante 4, le premier point A se situe à l'endroit où la première face 2A, et en particulier sa première surface latérale 18A, présente un point d'inflexion et passe de convexe à concave, et lorsque l'on parcourt la ligne méridienne L en direction du moyeu 6, le deuxième point B se situe à l'endroit où la deuxième face 2B, et en particulier sa deuxième surface latérale 18B, présente un point d'inflexion et passe de convexe à concave.

La ligne méridienne L présente une première tangente TA au premier point A et une deuxième tangent TB au deuxième point B.

Dans un exemple de réalisation, la première tangente TA et la deuxième tangente TB forment un angle non nul entre elles. La première tangente TA et la deuxième tangente TB ne sont donc pas parallèles entre elles.

Dans un exemple de réalisation, la première tangente TA forme un angle α non nul avec le plan médian P. La première tangente TA est non-parallèle avec le plan médian P. De préférence, l'angle α est compris entre 22° et 37°. Sur la Figure 1, la roue de chemin de fer 2 présente un angle α d'environ 22°.

La deuxième tangente TB est sensiblement perpendiculaire à l'axe X-X'. Elle est sensiblement parallèle au plan médian P.

De préférence, parmi les points du tronçon de la ligne méridienne L situé du côté de la deuxième face 2B par rapport au plan médian P, le deuxième point B est le plus éloigné du plan médian P.

A partir de son point d'intersection avec le plan médian P, la ligne méridienne L s'étend vers le deuxième point B en s'éloignant progressivement du plan médian P, jusqu'à atteindre la deuxième tangente TB.

Du côté de la première face 2A par rapport au plan médian P, la ligne méridienne L passe par un troisième point C qui est situé entre le point d'intersection de la ligne méridienne L avec le plan médian P et le premier point A, la ligne méridienne L présentant au troisième point C une troisième tangente TC qui est parallèle au plan médian P.

Ce troisième point C est le point de la ligne méridienne L situé du côté de la première face 2A par rapport au plan médian P, qui est le plus éloigné du plan médian P.

Du côté de la première face 2A, à partir de son point d'intersection avec le plan médian P, la ligne méridienne L s'éloigne progressivement du plan médian P jusqu'au troisième point C, puis se rapproche progressivement du plan médian P jusqu'au premier point A.

Une telle forme de la toile 8 permet d'obtenir un angle α souhaité, en pouvant obtenir des caractéristiques thermomécaniques satisfaisantes, en particulier en termes de souplesse et de résistance de la toile 8.

La distance entre le premier point A et le plan médian P est strictement inférieure à la distance entre le troisième point C et le plan médian P.

Avantageusement, la distance d3 entre le troisième point C et le plan médian P, prise suivant l'axe central X-X' est comprise entre 38 mm et 65,5 mm. Une telle valeur du déport maximal de la toile 8 par rapport au plan médian P du côté de la première face 2A, permet d'obtenir les caractéristiques thermomécaniques voulues.

Dans un exemple de réalisation, la distance d1 entre le premier point A et le plan médian P est comprise entre 21 mm et 37 mm et/ou la distance d2 entre le deuxième point B et la plan médian P est 97.8 mm

La jante 4 présente un premier diamètre interne DA sur la première face 2A et un deuxième diamètre interne DB sur la deuxième face 2B.

Le premier diamètre interne DA est le diamètre du bord interne circulaire du premier flanc 4A de la jante 4 et le deuxième diamètre interne DB est le diamètre du bord interne circulaire du deuxième flanc 4A de la jante 4.

De préférence, le rapport r du premier diamètre interne DA sur le deuxième diamètre interne DB est compris entre 0,96 et 1,12. Le respect de ce rapport r permet d'obtenir des propriétés thermomécaniques satisfaisantes.

On notera que le premier diamètre interne DA peut être inférieur au deuxième diamètre interne DB (rapport r inférieur à 1), supérieur au deuxième diamètre interne DB (rapport r supérieur à 1) ou égal au deuxième diamètre interne DB (rapport r égal à 1).

Dans l'exemple de la Figure 1, le premier diamètre interne DA est strictement inférieur au deuxième diamètre interne DB, de sorte que le rapport r du premier diamètre interne DA sur le deuxième diamètre interne DB est strictement inférieur à 1.

La jante 4 possède par exemple, à l'état neuf de la roue, un diamètre nominal D compris entre 650 mm et 1.000 mm. Le diamètre nominal D est pris entre l'axe central X-X' et le point d'intersection de la surface de roulement 10 de la jante 4 avec le plan médian P.

Le déport latéral DL de la jante 4 par rapport au moyeu 6 du côté de la première face 2A de la roue de chemin de fer 2 (i.e. la distance axiale prise suivant l'axe central X-X' entre le premier flanc 4A de la jante 4 et la première extrémité axiale 6A du moyeu 6) peut avoir une influence sur le déjettement de la roue de chemin de fer 2.

De préférence, le déport latéral DL est compris entre - 45 mm et 145 mm. Par convention, le déport latéral DL est négatif lorsque le premier flanc 4 de la jante 4 est décalé axialement par rapport à la première extrémité axiale 6A du côté opposé à la deuxième extrémité axiale 6B. Il est positif lorsque le premier flanc 4 de la jante 4 est décalé axialement par rapport à la première extrémité axiale du moyeu 6A du côté de la deuxième extrémité axiale 6B du moyeu 6. Sur la Figure 1, le déport latéral DL est positif.

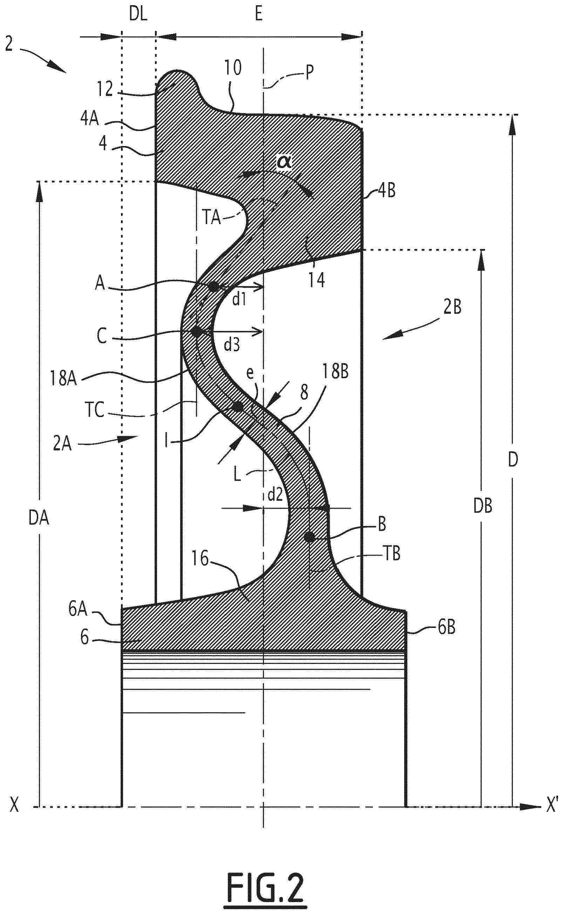

La roue de chemin de fer 2 de la Figure 2, sur laquelle les références numériques ont été conservées, diffère de celle de la Figure 1 en ce que l'angle α est plus grand, et en ce que le deuxième diamètre interne DB est strictement inférieur au premier diamètre interne DA, de sorte que le rapport r est strictement supérieur à 1. L'angle α est ici d'environ 37°.

Les deux géométries des Figures 1 et 2 sont deux géométries particulières qui délimitent les géométries permettant d'obtenir de bonnes performances de freinage. Une roue peut donc présenter une géométrie quelconque incluse entre ces deux géométries.

Ainsi, de préférence, l'angle α est compris entre 22° et 37°, comme illustré respectivement sur la Figure 1 et la Figure 2. Cela signifie que sur une roue de chemin de fer 2 selon l'invention, l'angle α peut prendre toutes les valeurs entre celles illustrée sur la Figure 1 et celle illustrée sur la Figure 2.

En particulier, les Figures 1 et 2 illustrent deux géométries particulières de la toile, qui peut adopter toute géométrie comprise entre celle de la Figure 1 et celle de la Figure 2.

Les formes et dimensions de la roue de chemin de fer 2 conforme à l'invention permettent d'obtenir des caractéristiques thermomécaniques satisfaisantes, en limitant la sensibilité de la roue de chemin de fer au déjettement, qu'il s'agisse du déjettement à chaud ou du déjettement résiduel.

La forme de la toile 8 permet d'obtenir une souplesse et une tenue mécanique satisfaisantes, tout en permettant la conception de zones de liaison favorisant, lors de freinages utilisant un sabot appliqué sur la jante 4, l'optimisation de la répartition du flux thermique dans la roue de chemin de fer 2. Il devient donc possible d'utiliser des sabots réalisés en matériaux composite en limitant les risques de surchauffe de la jante 4 et de déjettement excessif de la roue de chemin de fer 2. Elle permet aussi de respecter des contraintes d'émission sonore, et limitant les bruits émis, en particulier lors des freinages.

## Revendications

1. Roue de chemin de fer (2) présentant une forme de révolution autour d'un axe central (X-X') perpendiculaire à un plan médian (P) et présentant une première face (2A) et une deuxième face (2B) opposées, la roue de chemin de fer (2) comprenant une jante (4) dont la mi-épaisseur se trouve dans le plan médian (P) et qui possède une surface roulement (10) et un boudin (12) de guidage latéral situé du côté de la première face (2A), un moyeu (6) et une toile (8) reliant la jante (4) au moyeu (6), la toile (8) se raccordant à la jante (4) par une première zone de liaison (14) et au moyeu (6) par une deuxième zone de liaison (16), la toile (8) et les premières et deuxième zones de liaison (16) définissant une première surface latérale (18A) située la première face (2A) et une deuxième surface latérale (18B) située sur la deuxième face (2B), la toile (8) s'étendant suivant une ligne méridienne (L) s'étendant entre un premier point (A) situé à la jonction entre la toile (8) et la première zone de liaison (14) à l'endroit où la première surface latérale (18A) et la deuxième surface latérale (18B) passent d'une configuration où leurs courbures sont de types différents, à une configuration où elles sont toutes les deux concaves, et un deuxième point (B) situé à la jonction entre la toile (8) et la deuxième zone de liaison (16), à l'endroit où la première surface latérale (18A) et la deuxième surface latérale (18B) passent d'une configuration où leurs courbures sont de types différents, à une configuration où elles sont toutes les deux concaves, la jante (4) possédant un premier diamètre interne (DA) du côté de la première face (2A) et un deuxième diamètre interne (DB) du côté de la deuxième face (2B), la tangente (TA) à la ligne méridienne (L) au premier point (A) et la tangente (TB) à la ligne méridienne (L) au deuxième point (B) définissant un angle non-nul entre elles, la tangente (TA) à la ligne méridienne (L) au premier point (A) définissant un angle compris entre 22° et 37° avec le plan médian (P), et le rapport du premier diamètre interne (DA) sur le deuxième diamètre interne (DB) étant compris entre 0,96 et 1, 12.

2. Roue de chemin de fer selon la revendication 1, dans laquelle la tangente à la ligne méridienne (L) au deuxième point (B) est sensiblement parallèle au plan médian (P).

3. Roue de chemin de fer selon la revendication 1 ou la revendication 2, dans laquelle le premier point (A) et le deuxième point (B) sont situés de part et d'autre du plan médian (P), le premier point (A) étant situé du même côté du plan médian (P) que le boudin (12).

4. Roue de chemin de fer selon l'une quelconque des revendications précédentes, dans laquelle la ligne méridienne (L) présente un point d'inflexion (I) entre le premier point (A) et le deuxième point (B), le point d'inflexion (I) étant situé du même côté du plan médian (P) que le premier point (A).

5. Roue de chemin de fer selon l'une quelconque des revendications précédentes, la roue de chemin de fer (2) étant sensiblement centrée.

6. Roue de chemin de fer selon l'une quelconque des revendications précédentes, dans laquelle, du côté de la première face (2A) par rapport au plan médian (P), la ligne méridienne (L) passe par un troisième point (C) qui est situé entre le point d'intersection de la ligne méridienne (L) avec le plan médian (P) et le premier point (A), la ligne méridienne présentant, au troisième point (C), une troisième tangente (TC) qui est parallèle au plan médian (P).

7. Roue de chemin de fer selon la revendication 6, dans laquelle le troisième point (C) est le point de la ligne méridienne (L) situé du côté de la première face (2A) par rapport au plan médian (P), qui est le plus éloigné du plan médian (P).

8. Roue de chemin de fer selon l'une quelconque des revendications 1 à 5, dans laquelle la distance entre le plan médian (P) et un troisième point (C) de la ligne méridienne (L), situé du même côté du plan médian (P) que le premier point (A) et le plus éloigné du plan médian (P), est comprise entre 38 mm et 65,5 mm.

9. Roue de chemin de fer selon l'une quelconque des revendications précédentes, dans laquelle parmi les points du tronçon de la ligne méridienne (L) situés du côté de la deuxième face (2B) par rapport au plan médian (P), le deuxième point (B) est le plus éloigné du plan médian (P).

10. Roue de chemin de fer selon l'une quelconque des revendications précédentes, dans laquelle la ligne méridienne (L) est curviligne.

11. Roue de chemin de fer selon l'une quelconque des revendications précédentes, dans laquelle l'épaisseur (e) de la toile (8) diminue de manière monotone et progressive le long de la ligne méridienne (L) lorsque l'on se déplace du moyeu (6) vers la jante (4).

12. Roue de chemin de fer selon l'une quelconque des revendications précédentes, dans laquelle la distance (d1) entre le premier point (A) et le plan médian (P) est comprise entre 21 mm et 37 mm.

13. Roue de chemin de fer selon l'une quelconque des revendications précédentes, dans laquelle la jante (4) présente un déport latéral (DL) compris entre - 45 mm et 145 mm.

14. Bogie de véhicule ferroviaire comprenant au moins une roue de chemin de fer selon l'une quelconque des revendications précédentes.

15. Véhicule ferroviaire comprenant au moins une roue de chemin de fer selon l'une quelconque des revendications 1 à 13.

## Patentansprüche

1. Eisenbahnrad (2), das eine Rotationsform um eine Mittelachse (X-X') senkrecht zu einer Mittelebene (P) aufweist und eine erste Seite (2A) und eine zweite Seite (2B) aufweist, die einander gegenüberliegen, wobei das Eisenbahnrad (2) eine Felge (4) umfasst, deren Halbwertsbreite in der Mitte der Mittelebene (P) liegt, und die eine Lauffläche (10) und einen Spurkranz (12) zur Seitenführung aufweist, der sich auf Seiten der ersten Seite (2A) befindet, eine Nabe (6) und ein Gewebe (8), das die Felge (4) mit der Nabe (6) verbindet, wobei das Gewebe (8) mit der Felge (4) über einen ersten Verbindungsbereich (14) und mit der Nabe (6) durch einen zweiten Verbindungsbereich (16) verbunden ist, wobei das Gewebe (8) und der erste und der zweite Verbindungsbereich (16) eine erste Seitenfläche (18A), die sich auf der ersten Seite (2A) befindet, und eine zweite Seitenfläche (18B), die sich auf der zweiten Seite (2B) befindet, definieren, wobei das Gewebe (8) sich entlang einer Meridianlinie (L) erstreckt, die sich zwischen einem ersten Punkt (A), der sich an der Verbindung zwischen dem Gewebe (8) und dem ersten Verbindungsbereich (14) befindet, wo die erste Seitenfläche (18A) und die zweite Seitenfläche (18B) von einer Konfiguration, in der ihre Krümmungen von unterschiedlicher Art sind, in eine Konfiguration übergehen, in der sie beide konkav sind, und einem zweiten Punkt (B) der sich an der Verbindung zwischen dem Gewebe (8) und dem zweiten Verbindungsbereich (16) befindet, wo die erste Seitenfläche (18A) und die zweite Seitenfläche (18B) von einer Konfiguration, in der ihre Krümmungen von unterschiedlicher Art sind, in eine Konfiguration übergehen, in der sie beide konkav sind, wobei die Felge (4) einen ersten Innendurchmesser (DA) auf seiten der ersten Seite (2A) und einen zweiten Innendurchmesser (DB) auf seiten der zweiten Seite (2B) aufweist, wobei die Tangente (TA) an die Meridianlinie (L) im ersten Punkt (A) und die Tangente (TB) an die Meridianlinie (L) im zweiten Punkt (B) einen Winkel ungleich Null zwischen sich bilden, wobei die Tangente (TA) an die Meridianlinie (L) am ersten Punkt (A) einen Winkel zwischen 22° und 37° mit der Mittelebene (P) definiert, und das Verhältnis des ersten Innendurchmessers (DA) zum zweiten Innendurchmesser (DB) zwischen 0,96 und 1,12 liegt.

2. Eisenbahnrad nach Anspruch 1, wobei die Tangente an die Meridianlinie (L) am zweiten Punkt (B) im Wesentlichen parallel zur Mittelebene (P) verläuft.

3. Eisenbahnrad nach Anspruch 1 oder nach Anspruch 2, bei dem der erste Punkt (A) und der zweite Punkt (B) auf beiden Seiten der Mittelebene (P) liegen, wobei der erste Punkt (A) auf derselben Seite der Mittelebene (P) wie der Spurkranz (12) liegt.

4. Eisenbahnrad nach einem der vorhergehenden Ansprüche, bei dem die Meridianlinie (L) einen Wendepunkt (I) zwischen dem ersten Punkt (A) und dem zweiten Punkt (B) aufweist, wobei sich der Wendepunkt (I) auf derselben Seite der Mittelebene (P) wie der erste Punkt (A) befindet.

5. Eisenbahnrad nach einem der vorhergehenden Ansprüche, wobei das Eisenbahnrad (2) im Wesentlichen zentriert ist.

6. Eisenbahnrad nach einem der vorhergehenden Ansprüche, bei dem auf der Seite der ersten Fläche (2A) in Bezug auf die Mittelebene (P) die Meridianlinie (L) durch einen dritten Punkt (C) verläuft, der sich zwischen dem Schnittpunkt der Meridianlinie (L) mit der Mittelebene (P) und dem ersten Punkt (A) befindet, wobei die Meridianlinie an dem dritten Punkt (C) eine dritte Tangente (TC) aufweist, die parallel zur Mittelebene (P) verläuft.

7. Eisenbahnrad nach Anspruch 6, wobei der dritte Punkt (C) der Punkt auf der Meridianlinie (L) ist, der auf der Seite der ersten Fläche (2A) in Bezug auf die Mittelebene (P) liegt, die am weitesten von der Mittelebene (P) entfernt ist.

8. Eisenbahnrad nach einem der Ansprüche 1 bis 5, wobei der Abstand zwischen der Mittelebene (P) und einem dritten Punkt (C) der Meridianlinie (L), der auf derselben Seite der Mittelebene (P) wie der erste Punkt (A) und am weitesten von der Mittelebene (P) entfernt liegt, zwischen 38 mm und 65,5 mm beträgt.

9. Eisenbahnrad nach einem der vorhergehenden Ansprüche, wobei von den Punkten auf dem Abschnitt der Meridianlinie (L), die sich auf der Seite der zweiten Fläche (2B) in Bezug auf die Mittelebene (P) befinden, der zweite Punkt (B) am weitesten von der Mittelebene (P) entfernt ist.

10. Eisenbahnrad nach einem der vorhergehenden Ansprüche, wobei die Meridianlinie (L) krummlinig ist.

11. Eisenbahnrad nach einem der vorhergehenden Ansprüche, wobei die Dicke (e) des Gewebes (8) monoton und progressiv entlang der Meridianlinie (L) abnimmt, wenn man sich von der Nabe (6) zur Felge (4) hin bewegt.

12. Eisenbahnrad nach einem der vorhergehenden Ansprüche, wobei der Abstand (d1) zwischen dem ersten Punkt (A) und der Mittelebene (P) zwischen 21 mm und 37 mm liegt.

13. Eisenbahnrad nach einem der vorhergehenden Ansprüche, bei dem die Felge (4) eine seitliche Einpresstiefe (DL) zwischen - 45 mm und 145 mm aufweist.

14. Drehgestell für ein Schienenfahrzeug mit mindestens einem Eisenbahnrad nach einem der vorhergehenden Ansprüche.

15. Schienenfahrzeug, umfassend mindestens ein Eisenbahnrad nach einem der Ansprüche 1 bis 13.

## Claims

1. A railway wheel (2) having a shape of revolution about a central axis (X-X') perpendicular to a median plane (P) and having a first face (2A) and a second face (2B) opposite each other, the railway wheel (2) comprising a rim (4) whose half-thickness lies in the median plane (P) and which has a tread (10) and a lateral guide flange (12) located on the side of the first face (2A), a hub (6) and a web (8) connecting the rim (4) to the hub (6), the web (8) being connected to the rim (4) by a first connection zone (14) and to the hub (6) by a second connection zone (16), the web (8) and the first and second connection zones (16) defining a first lateral surface (18A) located on the first face (2A) and a second lateral surface (18B) located on the second face (2B), the web (8) extending along a meridian line (L) extending between a first point (A) located at the junction between the web (8) and the first connection zone (14) at the place where the first lateral surface (18A) and the second lateral surface (18B) change from a configuration in which their curvatures are of different types to a configuration in which they are both concave, and a second point (B) located at the junction between the fabric (8) and the second connection zone (16), at the place where the first lateral surface (18A) and the second lateral surface (18B) change from a configuration in which their curvatures are of different types, to a configuration in which they are both concave, the rim (4) having a first internal diameter (DA) on the side of the first face (2A) and a second internal diameter (DB) on the side of the second face (2B), the tangent (TA) to the meridian line (L) at the first point (A) and the tangent (TB) to the meridian line (L) at the second point (B) defining a non-zero angle between them, the tangent (TA) to the meridian line (L) at the first point (A) defining an angle of between 22° and 37° with the median plane (P), and the ratio of the first internal diameter (DA) to the second internal diameter (DB) being between 0.96 and 1.12.

2. The railway wheel as claimed in claim 1, wherein the tangent to the meridian line (L) at the second point (B) is substantially parallel to the median plane (P).

3. The railway wheel according to claim 1 or claim 2, wherein the first point (A) and the second point (B) are located on either side of the median plane (P), the first point (A) being located on the same side of the median plane (P) as the flange (12).

4. The railway wheel according to any one of the preceding claims, wherein the meridian line (L) has an inflection point (I) between the first point (A) and the second point (B), the inflection point (I) being located on the same side of the median plane (P) as the first point (A).

5. The railway wheel according to any one of the preceding claims, the railway wheel (2) being substantially centred.

6. The railway wheel according to any one of the preceding claims, wherein, on the side of the first face (2A) with respect to the median plane (P), the meridian line (L) passes through a third point (C) which is located between the point of intersection of the meridian line (L) with the median plane (P) and the first point (A), the meridian line having, at the third point (C), a third tangent (TC) which is parallel to the median plane (P).

7. The railway wheel according to claim 6, wherein the third point (C) is the point on the meridian line (L) located on the side of the first face (2A) with respect to the median plane (P), which is furthest from the median plane (P).

8. The railway wheel according to any one of claims 1 to 5, wherein the distance between the median plane (P) and a third point (C) on the meridian line (L), located on the same side of the median plane (P) as the first point (A) and furthest from the median plane (P), is between 38 mm and 65.5 mm.

9. The railway wheel according to any one of the preceding claims, wherein, among the points of the section of the meridian line (L) located on the side of the second face (2B) with respect to the median plane (P), the second point (B) is the furthest from the median plane (P).

10. The railway wheel according to any one of the preceding claims, wherein the meridian line (L) is curvilinear.

11. The railway wheel according to any one of the preceding claims, wherein the thickness (e) of the web (8) decreases monotonically and progressively along the meridian line (L) when moving from the hub (6) towards the rim (4).

12. The railway wheel according to any one of the preceding claims, wherein the distance (d1) between the first point (A) and the median plane (P) is between 21 mm and 37 mm.

13. The railway wheel according to any one of the preceding claims, wherein the rim (4) has a lateral offset (DL) of between 45 mm and 145 mm.

14. A railway vehicle bogie comprising at least one railway wheel according to any one of the preceding claims.

15. A railway vehicle comprising at least one railway wheel according to any one of the claims 1 to 13.
